(19) Europäisches Patentamt
European Patent Office
Office européen des brevets

(11) Publication number: **0 482 480 B1**

(12) **EUROPEAN PATENT SPECIFICATION**

(45) Date of publication of patent specification: **11.01.95**

(51) Int. Cl.$^{6}$: **C09D 183/08**

(21) Application number: **91117595.8**

(22) Date of filing: **15.10.91**

(54) **Surface-treating agent and surface-treated EPDM article.**

(30) Priority: **23.10.90 JP 284563/90**
**31.01.91 JP 10864/91**
**01.08.91 JP 192871/91**

(43) Date of publication of application:
**29.04.92 Bulletin 92/18**

(45) Publication of the grant of the patent:
**11.01.95 Bulletin 95/02**

(84) Designated Contracting States:
**DE FR GB IT**

(56) References cited:
**US-A- 4 378 389**

**DATABASE WPIL, no. 84-273 032 DERWENT PUBLICATIONS LTD., London, GB**

**DATABASE WPIL, no. 81-80 614 DERWENT PUBLICATIONS LTD., London, GB**

(73) Proprietor: **TOSHIBA SILICONE CO., LTD.**
**2-31, Roppongi 6-chome**
**Minato-ku**
**Tokyo 106 (JP)**

(72) Inventor: **Yonekura, Kazuya, c/o Toshiba Silicone Co. Ltd.**
**2-31, Roppongi 6-chome**
**Minato-ku,**
**Tokyo (JP)**
Inventor: **Shimotsu, Hiroyoshi, c/o Toshiba Silicone Co. Ltd.**
**2-31, Roppongi 6-chome**
**Minato-ku,**
**Tokyo (JP)**

(74) Representative: **Hansen, Bernd, Dr. Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**EP 0 482 480 B1**

## Description

The present invention relates to a surface-treating polyorganosiloxane composition which, when used in the surface treatment of substrates such as paper, rubber, plastic, and metal substrates, can form on the treated surfaces a coating film having non-tackiness, water repellency, abrasion resistance, and slip properties, and also showing excellent adhesion especially to EPDM rubber sheets and mold-shaped EPDM sponges.

Various kinds of polyorganosiloxane compositions have conventionally been used in treatments for imparting non-tackiness to substrate surfaces. These polyorganosiloxane compositions are roughly divided into: (1) solutions prepared by adding an Si-H bond-containing polyorganosiloxane and/or an organoalkoxysilane to a polydiorganosiloxane having a terminal hydroxyl group and further incorporating thereinto an organotin compound and an organic solvent; (2) aqueous emulsions prepared by adding an Si-H bond-containing polyorganosiloxane and/or an organoalkoxysilane to a polydiorganosiloxane having a terminal hydroxyl group, further adding poly(vinyl alcohol) or the like and emulsifying the resulting mixture in water; and (3) compositions comprising a polyorganosiloxane having two or more vinyl groups per molecule, an Si-H bond-containing polyorganosiloxane, platinum or a platinum compound, and either or both of an organic solvent and a curing inhibitor.

Although excellent in the ability to form non-tacky coatings on substrate surfaces, those polyorganosiloxane compositions are defective in that when they are applied to rubber or plastic substrates, the cured silicone layers readily rub off the substrates. Compositions (3) have another problem that when this kind of composition is used to treat natural rubber substrates, ordinary synthetic rubber substrates, or non-rigid poly(vinyl chloride) substrates, there often are cases where the vulcanizing agent, vulcanizing accelerator, or plasticizer contained in these substrates impairs the activity of the platinum or platinum compound in the composition (3) and, hence, the cure of the composition (3) is inhibited.

On the other hand, JP-A-54-43891 proposes a method for imparting excellent non-tackiness, water repellency, and abrasion resistance particularly to rubber and plastic surfaces, thereby eliminating the above-described defect. (The term "JP-A" as used herein means an "unexamined published Japanese patent application".) That is, it has been proposed to impart slip properties to cured coating films by using a composition comprising a polyorganosiloxane having at least two silicon-bonded monovalent hydrocarbon groups, per molecule, substituted with an epoxy-containing group such as a glycidoxy group and/or an epoxycyclohexyl group and a silane and/or siloxane having a substituted or unsubstituted amino group bonded to a silicon atom through at least one carbon atom and having a silicon-bonded alkoxyl group. It has also been proposed in this JP-A that by modifying the above composition by adding thereto a polydiorganosiloxane terminated at both ends by a hydroxyl group and further adding a polyorganohydrogensiloxane and a fatty acid metal salt, cured coating films having improved surface slip properties and good flexibility can be obtained, and the applied composition can be heat cured at an increased rate.

However, cured coating films formed from the above-proposed compositions do not always show good adhesion to all the natural and synthetic rubbers, although the rubber surfaces treated with the compositions have excellent non-tackiness, water repellency, and abrasion resistance. Thus, improvement in adhesion particularly to EPDM (ethylene-propylene-diene terpolymer) sheets, mold-shaped EPDM sponges, and other EPDM articles is strongly desired.

### SUMMARY OF THE INVENTION

The present inventors have conducted intensive studies to develop a surface-treating agent especially suitable for the surface treatment of EPDM articles. As a result, it has been found that a surface-treating agent showing excellent adhesion and free from the above-described problem can be obtained by adding as an additive a silane coupling agent having a mercapto group and/or a partial condensate of the silane coupling agent. The present invention has been completed based on this finding.

Accordingly, an object of the present invention is to provide a surface-treating agent which, when used as a surface-treating agent particularly for EPDM substrates such as EPDM rubber sheets and mold-shaped EPDM sponges, can form coating films having excellent non-tackiness, water repellency, and slip properties and also having significantly improved adhesion to the substrates.

Another object of the present invention is to provide an EPDM article surface-treated with the above surface-treating agent.

## DETAILED DESCRIPTION OF THE INVENTION

The surface-treating agent according to the present invention comprises

(A) a mixture obtained by blending

(1) a polyorganosiloxane represented by the average composition formula

$$[R_aSi(OH)_bO_{(4-a-b)/2}]_n$$

wherein R represents at least two members selected from the group consisting of hydrogen atom and substituted or unsubstituted monovalent hydrocarbon groups, provided that at least two of the R's in each molecule are a monovalent hydrocarbon group substituted with a glycidoxy group and/or an epoxycyclohexyl group, a and b are numbers satisfying the following equations:

$$1 \leqq a < 3,\ 1 \leqq a + b < 3,\ 0 \leqq b \leqq 0.2,$$

and n is a number of from 10 to 5,000, with

(2) a silane and/or siloxane having a substituted or unsubstituted amino group bonded to a silicon atom through at least one carbon atom and having a silicon-bonded alkoxyl group,

the relative amounts of ingredients (1) and (2) being such that the number of the substituted or unsubstituted amino groups in ingredient (2) is from 0.1 to 10 per epoxy group in ingredient (1), the epoxy group including both a glycidoxy group and an epoxycyclohexyl group,

and/or a curable material which is the same as the mixture except that the epoxy groups in ingredient (1) have been partly reacted with substituted or unsubstituted amino groups in ingredient (2), and

(B) 10-100 parts by weight, based on 100 parts by weight of (A), of a silane and/or siloxane having a mercapto group bonded to a silicon atom through at least one carbon atom and having a silicon-bonded alkoxyl group.

The EPDM article according to the present invention is an article which has been surface-treated with the above surface-treating agent.

The polyorganosiloxane (1) in component (A) used in the surface-treating agent of the present invention contains at least two monovalent hydrocarbon groups, per molecule, substituted with a glycidoxy group and/or an epoxycyclohexyl group. If the number of such epoxidized hydrocarbon groups is below 2 per molecule, coating films having desired strength cannot be formed. Examples of R other than such epoxidized hydrocarbon groups include hydrogen atom; alkyl groups such as methyl, ethyl, propyl, butyl, and hexyl; alkenyl groups such as vinyl and propenyl; aryl groups such as phenyl; aralkyl groups such as phenethyl; and substituted hydrocarbon groups which are the same as the above-described hydrocarbon groups except that the hydrogen atoms thereof have been partly replaced by a halogen atom, nitrile group, or other substituent. Of these, hydrogen atom, methyl group, vinyl group, and phenyl group are preferred, with methyl group being especially preferred, from the standpoints of the easy synthesis of the polyorganosiloxane and easy availability of starting materials.

In the average composition formula, a and b are numbers satisfying the equations described above. If a and (a + b) are below 1, coating films obtained from a surface-treating agent using such a polyorganosiloxane are too hard and have poor flexibility, resulting in a disadvantage that the coatings cannot follow deformations of the substrates or the coatings prevent the substrates from being deformed. If a and (a + b) are above 3, the final surface-treating agent has a poor curability and, hence, is disadvantageous in film formation. Symbol b indicates the number of silicon-bonded hydroxyl groups and should be 0.2 or less. If b exceeds 0.2, not only the final surface-treating agent has a poor storage stability, but it becomes impossible to obtain the desired non-tackiness and slip properties.

The degree of polymerization, n, of the polyorganosiloxane is selected from the range of from 10 to 5,000, preferably from 50 to 1,000, in order to attain easy synthesis of the polyorganosiloxane and in order that the viscosity of the final composition before cure is within a range which does not impede the application thereof and that cured coating films formed from the composition have good mechanical properties. If the degree of polymerization thereof is below 10, sufficient film strength cannot be obtained. If the degree of polymerization thereof is above 5,000, it is difficult to synthesize and handle such a polyorganosiloxane because of its high viscosity.

The silane and/or siloxane (2) in component (A) used in the surface-treating agent of the present invention is an alkoxysilane having a substituted or unsubstituted amino group bonded to a silicon atom through at least one carbon atom and/or a siloxane obtained by partial condensation of the alkoxysilane.

Examples of the substituted or unsubstituted amino group bonded to a silicon atom through at least one carbon atom include aminomethyl, β-aminoethyl, γ-aminopropyl, δ-aminobutyl, γ-(methylamino)propyl, γ-(ethylamino)propyl, N-(β-aminoethyl)-γ-aminopropyl, N-(β-dimethylaminoethyl)-γ-aminopropyl, and the like. From the standpoint of storage stability of the silane and/or siloxane (2), the silane and/or siloxane is preferably one in which an amino group is bonded to a silicon atom through at least three carbon atoms, like γ-aminopropyl group. The silane and/or siloxane, which has at least one group per molecule, containing such a substituted or unsubstituted amino group further contains an alkoxyl group bonded to a silicon atom in order to enhance adhesion to substrates. Examples of the alkoxyl group include methoxy, ethoxy, propoxy, and butoxy, with methoxy and ethoxy being generally used from the standpoint of easy synthesis. It is preferred that the number of such alkoxyl groups present in the silane and siloxane is at least two per molecule in order to impart good adhesion properties to the final surface-treating agent. The other remaining silicon-bonded groups in the silane and siloxane are monovalent alkyl groups having 1 to 6 carbon atoms.

The amount of the silane and/or siloxane (2) in component (A) added to the surface-treating agent is selected from a range such that the number of the amino groups in ingredient (2) which each is bonded to a silicon atom through at least one carbon atom is from 0.1 to 10, preferably from 0.7 to 1.5, per epoxy group in the polyorganosiloxane (1) in component (A), the epoxy group including both glycidoxy group and epoxycyclohexyl group. If the amino group number is below the above-specified lower limit, the final surface-treating agent is insufficient in curability and adhesion to substrates. On the other hand, too large an amino group number results also in poor curability and causes cured coating films to be brittle.

In the present invention, although component (A) generally is in the form of a mixture of ingredients (1) and (2), it may be a reaction product of ingredient (1) and ingredient (2). Alternatively, it is possible to react part of ingredient (1) with part of ingredient (2) and then blend the reaction product with ingredients (1) and (2) in an amount such that the final amino group amount relative to epoxy group amount is in the above-specified range, thereby obtaining component (A). However, the reaction product used here should be not one in which curing has been completed, but one which is in a state such that the epoxy groups in ingredient (1) have only partly reacted with amino groups in ingredient (2).

The silane and/or siloxane (B) used in the surface-treating agent of the present invention is an essential component for further enhancing the adhesion of component (A). This component (B) is an alkoxysilane having a mercapto group bonded to a silicon atom through at least one carbon atom and/or a partial condensation product of the alkoxysilane.

Examples of such silane and siloxane include alkoxysilanes such as mercaptomethyltrimethoxysilane, mercaptomethyltriethoxysilane, β-mercaptoethyltrimethoxysilane, β-mercaptoethyltriethoxysilane, γ-mercaptopropyltrimethoxysilane, γ-mercaptopropyltriethoxysilane, γ-mercaptopropylmethyldimethoxysilane, δ-mercaptobutyltrimethoxysilane, and δ-mercaptobutyltriethoxysilane, siloxanes which are partial hydrolytic condensation products of these alkoxysilanes, and the like.

The amount of component (B) added to the surface-treating agent is from 10 to 100 parts by weight per 100 parts by weight of component (A). If the amount of component (B) is too small, the desired improvement in adhesion to substrates cannot be attained. If the amount thereof is too large, the resulting surface-treating agent gives coating films which are too hard and brittle, so that the desired coating durability cannot be attained.

Although the object of the invention to provide a surface-treating agent which can form on substrate surfaces a coating film having non-tackiness, water repellency, abrasion resistance, and slip properties and also having improved film strength can be attained with the composition comprising components (A) and (B), the cure rate of the applied coating can be increased by further adding components (C), (D), and (E) in addition to components (A) and (B) described above.

The polydiorganosiloxane terminated at both ends by a hydroxyl group, which may be used as component (C) in the present invention, has a silicon-bonded hydroxyl group at both ends of the molecule thereof and takes part in the curing reaction of the surface-treating agent due to the reactivity of the hydroxyl groups.

Examples of silicon-bonded organic groups contained in the polydiorganosiloxane include alkyl groups such as methyl, ethyl, propyl, butyl, and hexyl; alkenyl groups such as vinyl and propenyl; aryl groups such as phenyl; aralkyl groups such as phenethyl; and substituted hydrocarbon groups which are the same as the above-described hydrocarbon groups except that the hydrogen atoms thereof have been partly replaced by a halogen atom, nitrile group, or other substituent. Of these, methyl is preferred from the standpoints of the easy synthesis of the polydiorganosiloxane and a balance between the viscosity of the uncured composition and the physical properties of cured coating films.

The viscosity of the polydiorganosiloxane terminated at both ends by a hydroxyl group is from 5 x $10^{-5}$ - 10 $m^2/s$ (50 to 10,000,000 cSt), preferably from 1,000 to 2,000,000 cSt, at 25 °C. If the viscosity thereof is below 50 cSt, cured coating films formed from the final composition are too brittle. If the viscosity thereof exceeds 10,000,000 cSt, the uncured composition has too large a viscosity and, hence, is disadvantageous in handling.

In the surface-treating agent of the present invention, the proportion of component (C) to component (A) is not particularly limited and can be selected freely. However, the larger the amount of component (C) relative to component (A) amount, the better the non-tackiness and water repellency of cured coatings, while the smaller the amount thereof, the better the abrasion resistance of coating films. The preferred range of the amount of component (A) is from 1 to 300 parts by weight per 100 parts by weight of component (C), the more preferred range thereof being from 10 to 100 parts by weight.

The polyorganohydrogensiloxane, component (D), which may be used in the present invention has at least three silicon-bonded hydrogen atoms per molecule in order to undergo dehydrogenation condensation reaction with the polydiorganosiloxane, component (C), terminated at both ends by a hydroxyl group, thereby forming a network structure.

Examples of silicon-bonded organic groups contained in the molecule of component (D) include the same groups described hereinabove as the examples of the silicon-bonded organic groups in component (C).

The siloxane chain in this polyorganohydrogensiloxane may be in any straight-chain, branched, or cyclic structure.

The amount of component (D) added to the surface-treating agent of the present invention is preferably from 0.5 to 50 parts by weight per 100 parts by weight of component (C). If the amount of component (D) is below 0.5 part by weight, the surface-treating agent cures at a rate which is too low to form a continuous coating film. If the amount thereof exceeds 50 parts by weight, the stability of the surface-treating agent is impaired, resulting in foaming of the surface-treating agent.

The curing catalyst, component (E), which may be used in the present invention serves to accelerate the dehydrogenation condensation reaction between hydroxyl groups in the polydiorganosiloxane (C) terminated at both ends by a hydroxyl group and Si-H bonds in the polyorganohydrogensiloxane (D).

This curing catalyst is metal salts of fatty acids, amines, quaternary ammonium hydroxides, or a combination thereof.

Examples of the metal salts of fatty acids include compounds containing an organic group directly bonded to a metal atom, such as dibutyltin diacetate, dibutyltin dioctoate, dibutyltin dilaurate, dibutyltin dioleate, dibutyltin distearate, tributyltin acetate, tributyltin octoate, tributyltin laurate, dioctyltin diacetate, dioctyltin dilaurate, diethyltin dioleate, and monomethyltin dioleate, and compounds not containing an organic group directly bonded to a metal atom, such as zinc octenoate, iron octenoate, and tin octenoate.

Examples of the amines include organic amines such as monomethylamine, dimethylamine, monoethylamine, diethylamine, ethylenediamine, and hexamethylenetetramine, amino group-containing silane compounds such as $\alpha$-aminopropyltriethoxysilane, and salts of such silane compounds.

Examples of the quaternary ammonium hydroxides include tetramethylammonium hydroxide, dimethylbenzylammonium hydroxide, and salts thereof.

The amount of this curing catalyst, component (E), added to the surface-treating agent is preferably from 0.5 to 10 parts by weight per 100 parts by weight of the sum of components (C) and (D). If the amount of component (E) is below 0.5 part by weight, the final composition cures too slowly, so that there is a fear that substrates which have been coated with the composition and undergone heat treatment suffer blocking. If the amount thereof exceeds 10 parts by weight, reaction proceeds in the liquid surface-treating agent, which therefore has a shortened pot life.

When applied to surface treatment of various substrates, the composition of the present invention, which comprises components (A) and (B) or components (A) to (E) as described above, can be used as it is or after being diluted with an organic solvent or emulsified in water with a suitable emulsifying agent.

Examples of the organic solvent include n-hexane, n-heptane, petroleum hydrocarbons, toluene, xylene, isopropanol, butanol, 1,1,1-trichloroethane, trichloroethylene, and the like. The amount of such an organic solvent used can be suitably selected according to the desired viscosity of the surface-treating agent.

Surface treatment using the surface-treating agent of the present invention is, for example, conducted as follows. First, component (A) is obtained by mixing ingredients (1) and (2). In this case, component (A) may be heated with stirring to proceed a reaction, thereby providing a partial condensation product. However, such a procedure is not essential.

To this component (A), component (B) or components (B), (C), (D), and (E) are added. The resulting mixture is homogenized to obtain a treating agent. As described above, this composition may be diluted

with a solvent or emulsified in water with an emulsifying agent. The thus-obtained surface-treating agent is first applied on a paper, rubber, plastic, or metal substrate or other substrate by dip coating, spray coating, brushing, knife coating, roll coating, or other coating technique. In the case where a solvent or water is used, they are removed by drying. Subsequently, the coating on the substrate is cured by allowing the coated substrate to stand at room temperature for a few to several hours or by suitably heating the coated substrate according to its heat resistance.

The heating conditions are as follows. In the case that the substrate is a paper, it is preferred to heat the coated substrate at a temperature of 120 to 180 °C for 10 to 30 seconds; in the case that the substrate is a rubber, it is preferred to heat the coated substrate at a temperature of 150 to 180 °C for 1 to 5 minutes; and in the case that the substrate is plastics, it is preferred to heat the coated substrate at a temperature of 70 to 150 °C for 30 seconds to 2 minutes.

Further, in the present invention, for the purpose of improving a weather resistance, inorganic type or organic type UV absorbers can be added; for the purpose of improving a slip property, a high viscosity polydimethylsiloxane or a polyalkylsilsesquioxane which is a silicone resin powder can be added; and for the purpose of coloration, inorganic pigments or the like can be added, to the composition in an amount which does not alter the object of the present invention.

When the composition of the present invention is used to treat various substrates, the composition can give a cured coating having excellent adhesion to the substrates as compared with the treatment with conventional silicone compositions. In particular, the composition of the present invention can give a cured coating having excellent adhesion to rubbers, plastics and the like, particularly an EPDM rubber sheet or a mold-formed sponge, to which a sufficient adhesion has not been obtained with the conventional silicone composition for forming a non-tacky coating. Further, since the composition of the present invention can form a cured coating at normal temperature or relatively low temperature, treatment with the composition is possible to a substrate having a low heat resistance or a large-size substrate which is difficult to heat treat, thereby giving a cured coating having excellent non-tackiness to other substance, good water repellency and excellent abrasion resistance.

The composition of the present invention can be advantageously used when non-tackiness and water repellency are to be imparted to various substrates including rubbers and plastics. Further, the composition of the present invention is also utilizable as a primer when silicone rubbers or silicone compositions curable into a rubbery state are to be bonded to substrates.

The present invention is explained in more detail by reference to the following examples, which are not to be construed as limiting the scope of the invention. In these examples, all parts, percents, ratios and the like are by weight, unless otherwise indicated.

## EXAMPLE 1

100 Parts of polydimethylsiloxane (A-1) having a γ-glycidoxypropyl group at both ends thereof and having a degree of polymerization of 50, 4 parts of γ-aminopropyltriethoxysilane (A-2), and 196 parts of toluene were mixed together to obtain a uniform solution.

Thereafter, 30 parts of γ-mercaptopropyltriethoxysilane (B) was added to the solution, and this mixture was subjected to dispersion treatment using a homomixer, thereby obtaining a composition of the present invention.

This composition was spray-coated on an EPDM rubber sheet, and the coated rubber sheet was allowed to stand at room temperature for 24 hours, thereby removing the toluene by evaporation and curing the coating. Thus, a surface-treated EPDM rubber sheet was obtained which had on the surface thereof a coating of the composition of the present invention.

## COMPARATIVE EXAMPLE 1a

A composition was obtained in the same manner as in Example 1 except that γ-mercaptopropyltriethoxysilane (A-2) was not used. Using this composition, surface treatment of an EPDM rubber sheet was conducted in the same manner as in Example 1 to obtain a surface-treated EPDM rubber sheet having a coating thereon.

## COMPARATIVE EXAMPLE 1b

Into 200 parts of toluene was dissolved 100 parts of polydimethylsiloxane having a hydroxyl group at both ends thereof and having a degree of polymerization of 4,000. Thereto were added 35 parts of

polymethylhydrogensiloxane terminated at both ends by a trimethylsilyl group and having a degree of polymerization of 50, 6 parts of dibutyltin laurate, and 2 parts of γ-aminopropyltriethoxysilane. The resulting mixture was homogenized and then diluted with toluene to obtain a toluene solution having a polysiloxane content of 5%. This solution was spray-coated on the surface of an EPDM rubber sheet, the solvent was removed by evaporation, and the coating was then cured at 150°C for 5 minutes. Thus, a surface-treated EPDM rubber sheet having a non-tacky coating was obtained.

The three kinds of surface-treated EPDM rubber sheets obtained in Example 1 and Comparative Examples 1a and 1b were subjected to a coating film strength test and a crosscut tape test. The results obtained are shown in Table 1.

The crosscut tape test was conducted as follows.

The coating was crosshatch-wise incised by making eleven parallel cuts in each direction at intervals of 1 mm, thereby to make 100 squares. To the incised surface was applied an adhesive tape (prepared by coating a polyester film with pressure-sensitive silicone adhesive YR3340 (trade name, manufactured by Toshiba Silicone Co., Ltd.) at a thickness of 40 µm and then allowing the coated film to stand for 48 hours in an air conditioned room). The tape was then stripped, and the number of squares remaining unpeeled was counted. Adhesion of the coating was thus evaluated in terms of the number of remaining squares.

Table 1

| | Example 1 | Comparative Example 1a | Comparative Example 1b |
|---|---|---|---|
| Coating film strength (friction with fingertip) | Unchanged | Unchanged | Coating peeled off the substrate |
| Crosscut tape test | 100/100 | 20/100 | 0/100 |

EXAMPLE 2 AND COMPARATIVE EXAMPLES 2a AND 2b

100 Parts of polyorganosiloxane (A-1) represented by the formula

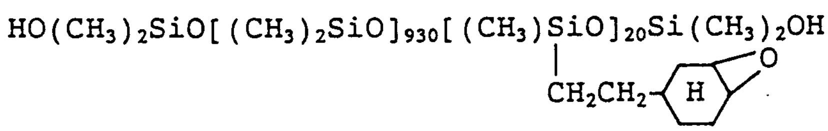

20 parts of N-(β-aminoethyl)-γ-aminopropyltriethoxysilane (A-2), 20 parts of isopropyl alcohol, 80 parts of methyl ethyl ketone, and 200 parts of toluene were mixed together to prepare a uniform solution.

To this solution was added 40 parts of γ-mercaptopropyltrimethoxysilane(B). The resulting mixture was subjected to dispersion treatment using a homomixer, thereby obtaining a composition of the present invention.

This composition was coated on an EPDM rubber sheet. The solvent was then removed by evaporation, and the resulting coated sheet was heat-treated at 150°C for 5 minutes, thereby forming a tough coating on the rubber surface.

This surface-treated rubber sheet was tested for the abrasion resistance of the coating, and the results obtained are shown in Table 2. For the purpose of comparison, a surface-treated EPDM rubber sheet prepared in the same manner as the above except that γ-mercaptopropyltrimethoxysilane was not used (Comparative Example 2a), and a surface-untreated EPDM rubber sheet (Comparative Example 2b) were subjected to the same abrasion resistance test, and the results obtained are also shown in Table 2.

The abrasion resistance test was conducted as follows.

A stainless-steel rod having a diameter of 5 mm was pressed against the rubber sheet at a depth of 5 mm, and the rod was moved forward and backward repeatedly over a distance of 10 cm at a speed of 30 forward-and-backward movements per minute. The abrasion resistance was evaluated in terms of the number of forward-and-backward movements counted before crack occurrence.

Table 2

| | Example 2 | Comparative Example 2a | Comparative Example 2b |
|---|---|---|---|
| Number of rod movements before cracking | 10,000 or more | 6,000 | 1,000 |

EXAMPLE 3

In a flask was placed γ-mercaptopropyltrimethoxysilane. This alkoxysilane was heated with refluxing, while equimolar amount of water was kept being added thereto dropwise. Thus, hydrolysis was conducted to obtain an alkoxysiloxane (B).

A composition according to the present invention was then obtained in the same manner as in Example 1 except that the above-obtained alkoxysiloxane was used in place of γ-mercaptopropyltriethoxysilane.

Using this composition, a surface-treated EPDM rubber sheet was prepared in the same manner as in Example 1. The coating on the rubber sheet was evaluated in the same manner as in Example 1 and, as a result, it was found that a coating having excellent adhesion was obtained.

EXAMPLE 4

A composition was prepared and surface treatment of an EPDM rubber sheet was conducted in the same manner as in Example 1 except that 5 parts of $[(CH_3)_2N^+(CH_2)_2NH(CH_2)_3Si(OCH_3)_3]Cl^-$ was used in place of γ-aminopropyltriethoxysilane (A-2). Thus, a tough coating strongly adhering to the surface of the EPDM rubber sheet was obtained.

This surface-treated rubber sheet was subjected to the same crosscut tape test as in Example 1. As a result, the adhesion was 100/100.

EXAMPLE 5

100 Parts of polyorganosiloxane (A-1) represented by the formula

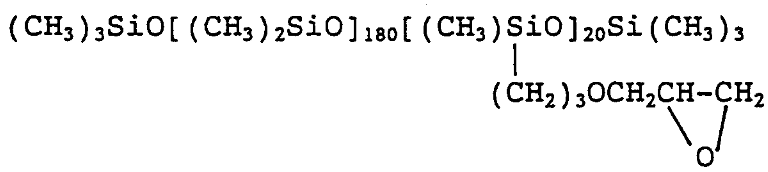

20 parts of γ-aminopropyltriethoxysilane (A-2), and 100 parts of n-heptane were mixed together to prepare a uniform solution.

To this solution was added 40 parts of γ-mercaptopropyltrimethoxysilane(B). The resulting mixture was subjected to dispersion treatment using a homomixer, thereby obtaining a composition of the present invention.

This surface-treating agent was applied on the surface of an EPDM rubber sheet by means of a roll coater. The coated rubber sheet was dried at room temperature for 2 minutes to remove the solvent. On the resulting surface was applied, with a roll coater, a 10% toluene solution of a composition of 100 parts of α,ω-dihydroxypolydimethylsiloxane represented by the average formula $H[(CH_3)_2SiO]_{440}H$, 10 parts of ethyl silicate, and 5 parts of dibutyltin dioctoate and which was curable into a rubbery state. After the solvent was removed by evaporation, the coated rubber sheet was heated at 60°C for 5 minutes to form a cured rubbery coating. The adhesion of this coating to the EPDM rubber sheet was so good that the coating was not easily rubbed from the substrate even by friction with a fingertip.

On the other hand, the above-described toluene solution of the composition curable into a rubbery state was applied on an EPDM rubber sheet without using the above-described surface-treating agent, and then cured under the same conditions as the above to obtain a coating. However, upon friction with a fingertip, the rubbery coating readily rubbed off the substrate.

EXAMPLE 6

100 Parts of polydimethylsiloxane (A-1) having a glycidoxypropyl group at both ends thereof and having a degree of polymerization of 100, 10 parts of γ-aminopropyltriethoxysilane (A-2), and 1,000 parts of toluene were mixed together to prepare a solution.

To this solution were added 100 parts of dimethylpolysiloxane (C) having a hydroxyl group at both ends thereof and having a viscosity of 1,000,000 cSt at 25 °C, 35 parts of γ-mercaptopropyltrimethoxysilane (B), 7 parts of polymethylhydrogensiloxane (D) terminated at both ends by a trimethylsilyl group and having degree of a polymerization of 20, and 20 parts of a toluene solution of dibutyltin dioctoate (E) (the solution having a tin content of 10 wt%). The resulting mixture was stirred until it became uniform, and then subjected to dispersion treatment using a homomixer, thereby obtaining a composition of the present invention.

This composition was spray-coated on an EPDM rubber sheet. After the solvent was removed by evaporation, the coated rubber sheet was heat-treated at 150 °C for 3 minutes, thereby obtaining a surface-treated EPDM rubber sheet having on the surface thereof a coating of the composition of the present invention.

COMPARATIVE EXAMPLE 3

A composition was obtained in the same manner as in Example 6 except that γ-mercaptopropyltriethoxysilane (B) was not used. In the same manner as in Example 6, an EPDM rubber sheet was treated with the above-obtained composition to obtain a coated EPDM rubber sheet.

The two kinds of surface-treated EPDM rubber sheets obtained in Example 6 and Comparative Example 3 were subjected to a coating film strength test and a crosscut tape test in the same manner as in Example 1. The results obtained are shown in Table 3.

Table 3

| | Example 6 | Comparative Example 3 |
|---|---|---|
| Coating film strength (friction with fingertip) | Unchanged | Unchanged |
| Crosscut tape test | 100/100 | 20/100 |

EXAMPLE 7

In a flask was placed γ-mercaptopropyltrimethoxysilane. This alkoxysilane was heated with refluxing, while equimolar amount of water was kept being added thereto dropwise. Thus, hydrolysis was conducted to obtain an alkoxysiloxane (S-1).

Using this alkoxysiloxane (S-1), a composition was prepared in the same manner as in Example 6 except that component (C) was replaced with (S-1). Surface treatment of an EPDM rubber sheet was conducted using the above-obtained composition of the present invention, thereby obtaining a coated EPDM sheet. The coating thus-obtained was evaluated in the same manner as in Example 6. As a result, no change was observed after the friction with a fingertip, and the result of the crosscut tape test was 100/100.

EXAMPLE 8 AND COMPARATIVE EXAMPLES 4 TO 6

Four kinds of compositions were prepared according to the respective formulations shown in Table 4. Each of these compositions was applied on an EPDM rubber sheet, and the resulting rubber sheet was heat-treated at 150 °C for 3 minutes, thereby forming a non-tacky coating on the surface of the EPDM rubber sheet. These coatings were evaluated by friction with a finger and by a crosscut tape test in the same manner as in Example 6. The results obtained are shown in Table 4.

Table 4

| | Example | Comparative Example | | |
|---|---|---|---|---|
| | 8 | 4 | 5 | 6 |
| **Formulation (parts)** | | | | |
| Polydimethylsiloxane having hydroxyl group at both ends (viscosity 800,000 cSt) | 100 | 100 | 100 | 100 |
| γ-Mercaptopropyltrimethoxysilane | 35 | - | - | - |
| Polyorganohydrogensiloxane *1 | 7 | 7 | 5 | 7 |
| Epoxy group-containing polyorganosiloxane *2 | 100 | 100 | - | - |
| γ-Aminopropyltrimethoxysilane | 10 | 10 | - | 10 |
| Dibutyltin dioctoate solution in toluene (concentration: 10 wt% in terms of tin amount) | 20 | 20 | 20 | 20 |
| Toluene | 1,000 | 1,000 | 1,000 | 1,000 |
| **State of coating after friction with finger** | | | | |
| Peeling | Not occurred | Not occurred | Occurred | Occurred |
| Clouding | Not occurred | Not occurred | Unable to judge because of considerable peeling | Occurred |
| Crosscut tape test | 100/100 | 15/100 | 0/100 | 0/100 |

*1: $(CH_3)_3SiO[(CH_3)HSiO]_{20}Si(CH_3)_3$

*2:

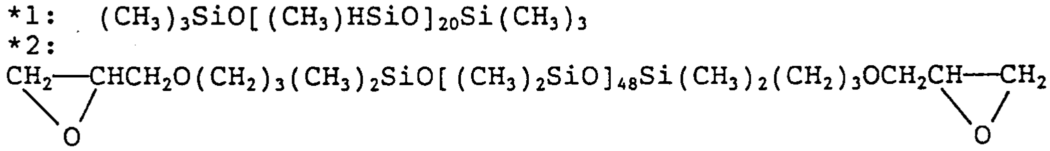

EXAMPLES 9 TO 11

Compositions according to the present invention were prepared in the same manner as in Example 8 except that the catalysts shown in Table 5 were used in place of dibutyltin dioctoate.

Using each of these compositions, surface treatment of an EPDM rubber sheet was conducted in the same manner as in Example 3 except that the applied composition was cured under the conditions shown in Table 5, thereby forming a coating on the rubber sheet surface. Each of the thus-formed coating was

evaluated by friction with a finger and by a crosscut tape test. As a result, all the coatings did not suffer peeling or clouding after the friction with a finger, and the result of the crosscut tape test was 100/100 for each coating.

Table 5

| | Catalyst | | Curing temperature (°C) | Curing time (min) |
|---|---|---|---|---|
| | Kind | Amount (parts) | | |
| Example 9 | Dioctyltin dilaurate | 5 | 180 | 5 |
| Example 10 | Tributyltin acetate | 3 | 170 | 3 |
| Example 11 | Zinc octenoate | 3 | 150 | 3 |

EXAMPLE 12 AND COMPARATIVE EXAMPLES 7a AND 7b

To 100 parts of polydimethylsiloxane (C) having a hydroxyl group at both ends thereof and having a viscosity of 500,000 cSt at 25°C were added 100 parts of polyorganosiloxane (A-1) represented by the formula

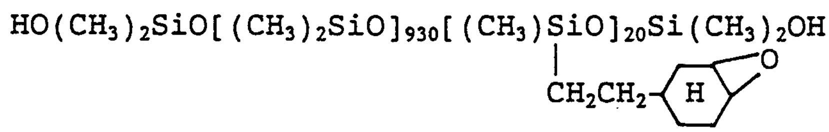

20 parts of γ-(β-aminoethyl)aminopropyltriethoxysilane (A-2), 20 parts of isopropyl alcohol, 80 parts of methyl ethyl ketone, and 200 parts of toluene. The resulting mixture was stirred to prepare a uniform solution. To this solution was added 40 parts of γ-mercaptopropyltrimethoxysilane (B). This mixture was subjected to dispersion treatment using a homomixer, thereby obtaining a composition of the present invention.

This composition was coated on an EPDM rubber sheet. The solvent was then removed by evaporation, and the resulting coated sheet was heat-treated at 150°C for 5 minutes, thereby forming a tough coating on the rubber surface.

This surface-treated rubber sheet was tested for the abrasion resistance of the coating, and the results obtained are shown in Table 6. For the purpose of comparison, a surface-treated EPDM rubber sheet prepared in the same manner as the above except that γ-mercaptopropyltrimethoxysilane (B) was not used (Comparative Example 7a) and a surface-untreated EPDM rubber sheet (Comparative Example 7b) were subjected to the same abrasion resistance test, and the results obtained are also shown in Table 6.

The abrasion resistance test was conducted as follows.

A stainless-steel plate having a thickness of 10 mm and a width of 20 mm was used as a frictionizing element, with its contact surface being rounded. This plate was pressed against the coated rubber sheet at a load of 500 g, and the plate was moved forward and backward repeatedly over a distance of 10 cm at a speed of 30 forward-and-backward movements per minute. The abrasion resistance was evaluated in terms of the number of forward-and-backward movements counted before the rubber surface was worn out by the friction.

Table 6

| | Example 12 | Comparative Example 7a | Comparative Example 7b |
|---|---|---|---|
| Number of frictionizing movements | 20,000 or more | 16,000 | 800 |

While the invention has been described in detail and with reference to specific embodiments thereof, it will be apparent to one skilled in the art that various changes and modifications can be made therein without

departing from the spirit and scope thereof.

**Claims**

1. A surface-treating agent comprising
   (A) a mixture obtained by blending
   (1) a polyorganosiloxane represented by the average composition formula

$$[R_aSi(OH)_bO_{(4-a-b)/2}]_n$$

wherein R represents at least two members selected from the group consisting of hydrogen atom and substituted or unsubstituted monovalent hydrocarbon groups, provided that at least two of the R's in each molecule are a monovalent hydrocarbon group substituted with a glycidoxy group and/or an epoxycyclohexyl group, a and b are numbers satisfying the following equations:

$$1 \leqq a < 3,\ 1 \leqq a + b < 3,\ 0 \leqq b \leqq 0.2,$$

and n is a number of from 10 to 5,000, with
(2) a silane and/or siloxane having a substituted or unsubstituted amino group bonded to a silicon atom through at least one carbon atom and having a silicon-bonded alkoxyl group,
the relative amounts of ingredients (1) and (2) being such that the number of the substituted or unsubstituted amino groups in ingredient (2) is from 0.1 to 10 per epoxy group in ingredient (1), said epoxy group including both glycidoxy group and epoxycyclohexyl group,
and/or a curable material which is the same as said mixture except that the epoxy groups in ingredient (1) have been partly reacted with substituted or unsubstituted amino groups in ingredient (2), and
(B) 10-100 parts by weight, based on 100 parts by weight of (A), of a silane and/or siloxane having a mercapto group bonded to a silicon atom through at least one carbon atom and having a silicon-bonded alkoxyl group.

2. A surface-treating agent as claimed in claim 1, wherein R in ingredient (1) in component (A) is methyl group and a hydrocarbon group substituted with a glycidoxy group and/or an epoxycyclohexyl group.

3. A surface-treated EPDM article having a non-tacky coating formed by applying the surface-treating agent as claimed in claim 1.

4. An EPDM article as claimed in claim 3, wherein said non-tacky coating is a primer coating.

5. A surface-treating agent according to claim 1 further comprising
   (C) a polydiorganosiloxane terminated at both ends by a hydroxyl group and having a viscosity as measured at 25 °C of $5 \times 10^{-5}$ - 10 $m^2/s$ (from 50 to 10,000,000 cSt),
   (D) a polyorganohydrogensiloxane having at least three silicon-bonded hydrogen atoms per molecule, and
   (E) a curing catalyst.

6. A surface-treating agent as claimed in claim 5, wherein R in ingredient (1) in component (A) is methyl group and a hydrocarbon group substituted with a glycidoxy group and/or an epoxycyclohexyl group.

7. A surface-treated EPDM article having a non-tacky coating formed by applying the surface-treating agent as claimed in claim 5.

8. An EPDM article as claimed in claim 7, wherein said non-tacky coating is a primer coating.

**Patentansprüche**

1. Oberflächenbehandlungsmittel, enthaltend:
   (A) eine Mischung, erhalten durch Vermischen von

(1) einem Polyorganosiloxan, dargestellt durch die mittlere Zusammensetzungsformel

$[R_aSi(OH)_bO_{(4-a-b)/2}]_n$

worin R mindestens zwei Mitglieder, ausgewählt aus Wasserstoffatom und substituierten oder nichtsubstituierten monovalenten Kohlenwasserstoffgruppen darstellen, mit der Maßgabe, daß mindestens zwei der R's in jedem Molekül monovalente Kohlenwasserstoffgruppen sind, die mit einer Glycidoxygruppe und/oder einer Epoxycyclohexylgruppe substituiert sind, a und b sind Zahlen, die den folgenden Gleichungen genügen:

$1 \leqq a < 3$, $1 \leqq a + b < 3$, $0 \leqq b \leqq 0,2$

und n ist eine Zahl von 10 bis 5.000, mit

(2) einem Silan und/oder einem Siloxan mit einer substituierten oder nichtsubstituierten Aminogruppe, die an ein Siliciumatom über mindestens ein Kohlenstoffatom gebunden ist, und mit einer siliciumgebundenen Alkoxylgruppe, wobei die relativen Mengen der Bestandteile (1) und (2) derart sind, daß die Zahl der substituierten oder unsubstituierten Aminogruppen in Bestandteil (2) von 0,1 bis 10 pro Epoxygruppe in Bestandteil (1) ist, wobei die Epoxygruppe sowohl die Glycidoxygruppe und die Epoxycyclohexylgruppe einschließt,

und/oder einem härtbaren Material, welches das gleiche ist, wie die Mischung, mit Ausnahme, daß die Epoxygruppen in Bestandteil (1) teilweise mit den substituierten oder unsubstituierten Aminogruppen in Bestandteil (2) umgesetzt sind, und

(B) 10 bis 100 Gew.-Teilen, bezogen auf 100 Gew.-Teile (A) eines Silans und/oder Siloxans mit einer Mercaptogruppe, die an ein Siliciumatom über mindestens ein Kohlenstoffatom gebunden ist, und mit einer siliciumgebundenen Alkoxylgruppe.

2. Oberflächenbehandlungsmittel nach Anspruch 1, worin R in Bestandteil (1) in Komponente (A) mit einer Methylgruppe und einer Kohlenwasserstoffgruppe, substituiert mit einer Glycidoxygruppe und/oder einer Epoxycyclohexylgruppe ist.

3. Oberflächenbehandelter EPDM-Artikel mit einem nichtklebrigen Überzug, gebildet durch Aufbringen des Oberflächenbehandlungsmittels gemäß Anspruch 1.

4. Ein EPDM-Artikel nach Anspruch 3, worin der nichtklebrige Überzug eine Grundierungsbeschichtung ist.

5. Oberflächenbehandlungsmittel nach Anspruch 1, das zusätzlich enthält

(C) ein Polydiorganosiloxan mit Hydroxylgruppen an beiden Enden und einer Viskosität, gemessen bei 25 °C, von $5 \times 10^{-5}$ - 10 $m^2$/sek. (von 50 bis 10.000.000 cST),

(D) ein Polyorganohydrogensiloxan mit mindestens 30 siliciumgebundenen Wasserstoffatomen pro Molekül und

(E) ein Härtungskatalysator.

6. Oberflächenbehandlungsmittel nach Anspruch 5, worin R in Bestandteil (1) in Komponente (A) eine Methylgruppe und eine Kohlenwasserstoffgruppe ist, die mit einer Glycidoxygruppe und/oder einer Epoxycyclohexylgruppe substituiert ist.

7. Oberflächenbehandelter EPDM-Artikel mit einem nichtklebrigen Überzug, gebildet durch Aufbringen des Oberflächenbehandlungsmittels nach Anspruch 5.

8. EPDM-Artikel nach Anspruch 7, worin der nichtklebrige Überzug ein Grundierungsüberzug ist.

## Revendications

1. Agent de traitement de surface comprenant

(A) un mélange obtenu en mélangeant :

(1) un polyorganosiloxane représenté par la formule moyenne de composition :

$[R_aSi(OH)_bO_{(4-a-b)/2}]_n$

dans laquelle R représente au moins deux éléments choisis dans le groupe constitué par l'atome d'hydrogène et des groupements hydrocarbonés monovalents substitués ou non substitués, à la condition qu'au moins deux des radicaux R de chaque molécule soient un groupement hydrocarboné monovalent substitué avec un groupement glycidoxy et/ou un groupement époxycyclohexyle, a et b sont des nombres satisfaisant aux équations suivantes :

$1 \leqq a < 3,\ 1 \leqq a+b < 3,\ 0 \leqq b \leqq 0{,}2,$

et n est un nombre compris entre 10 et 5 000, avec
(2) un silane et/ou un siloxane ayant un groupement amino substitué ou non substitué lié à un atome de silicium par au moins un atome de carbone et ayant un groupement alcoxyle lié au silicium,

les quantités relatives des composants (1) et (2) étant telles que le nombre de groupements amino substitués ou non substitués du composant (2) est compris entre 0,1 et 10 par groupement époxy du composant (1), ledit groupement époxy comprenant à la fois un groupement glycidoxy et un groupement époxycyclohexyle,

et/ou un produit vulcanisable, qui est identique audit mélange, à ceci près que les groupements époxy du composant (1) ont partiellement réagi avec les groupements amino substitués ou non substitués du composant (2) et

(B) de 10 à 100 parties en masse, par rapport à 100 parties en masse de (A), d'un silane et/ou d'un siloxane ayant un groupement mercapto lié à un atome de silicium par au moins un atome de carbone et ayant un groupement alcoxyle lié au silicium.

**2.** Agent de traitement de surface selon la revendication 1, pour lequel le radical R du composant (1) dans le composant (A) est le groupement méthyle et un groupement hydrocarboné substitué avec un groupement glycidoxy et/ou un groupement époxycyclohexyle.

**3.** Article en EPDM traité à la surface, ayant un revêtement non pégueux formé par application de l'agent de traitement de surface selon la revendication 1.

**4.** Article en EPDM selon la revendication 3, dans lequel ledit revêtement non pégueux est un revêtement de couche de fond.

**5.** Agent de traitement de surface selon la revendication 1, comprenant de plus

(C) un polydiorganosiloxane terminé aux deux extrémités par un groupement hydroxyle et ayant une viscosité, telle que mesurée à 25 °C, comprise entre 5 x $10^{-5}$ et 10 $m^2/s$ (entre 50 et 10 000 000 cSt),

(D) un polyorganohydrogénosiloxane ayant par molécule au moins 3 atomes d'hydrogène liés au silicium et

(E) un catalyseur de vulcanisation.

**6.** Agent de traitement de surface selon la revendication 5, pour lequel le radical R du composant (1) dans le composant (A) est le groupement méthyle et un groupement hydrocarboné substitué avec un groupement glycidoxy et/ou un groupement époxycyclohexyle.

**7.** Article en EPDM traité à la surface, ayant un revêtement non pégueux formé par application de l'agent de traitement de surface selon la revendication 5.

**8.** Article en EPDM selon la revendication 7, dans lequel ledit revêtement non pégueux est un revêtement de couche de fond.